# EUROPÄISCHE PATENTSCHRIFT

(11) **EP 0 790 202 B1**
(45) Veröffentlichungstag und Bekanntmachung des Hinweises auf die Patenterteilung: **19.06.2002**
(21) Anmeldenummer: 96120160.5
(22) Anmeldetag: 16.12.1996
(51) Int. Cl.: B65G 69/28

(54) **Überladebrücke für Rampen**
Loading bridge for ramps
Pont de chargement pour rampes

(30) Priorität: 17.02.1996 DE 19605913
(43) Veröffentlichungstag der Anmeldung: 20.08.1997
(73) Patentinhaber: Alten Gerätebau GmbH, 30974 Wennigsen (DE)
(72) Erfinder: Alten Kurt, 30974 Wennigsen (DE); Borchardt, Horst, 30974 Wennigsen (DE)
(74) Vertreter: Depmeyer, Jochen

(56) Entgegenhaltungen:
- WO-A-94/10073
- DE-C- 19 605 545
- US-A- 3 235 896
- US-A- 3 500 486

## Beschreibung

Die Erfindung betrifft eine Überladebrücke für Rampen mit einer an ihrem rampenseitigen Ende um eine waagerechte Achse verschwenkbaren Brückenplatte, die an ihrem freien Ende mit einer von der etwa senkrechten Ruhelage in die etwa waagerechte Arbeitsstellung ausklappbaren Verlängerung zum Auflegen auf die zu be- bzw. entladende Plattform versehen ist, wobei auf die Brückenplatte von unten her, vorzugsweise über eine Kurvenscheibe, ein unter Federspannung stehender, schwenkbarer Hebel zur Erleichterung des Hochschwenkens der Brückenplatte von Hand einwirkt und das Ausklappen der Verlängerung durch ein sich mit dem Hochschwenken der Brückenplatte straffendes Seil od. dgl. erfolgt, das mit seinem einen Ende über ein Klappgestänge mit der Verlängerung verbunden und an seinem anderen Ende verankert ist. Das genannte Seil kann dabei durch ein Band, eine Kette oder ein ähnliches biegsames Zugglied ersetzt werden.

Die Erfindung geht demgemäss von einer Überladebrücke aus, deren Brückenplatte von Hand verschwenkt und deren Verlängerung mit der Verschwenkung der Brückenplatte nach oben ausgeklappt und so in die Wirkstellung gebracht wird. Es versteht sich, dass bei der an sich federunterstützten Brückenplatte für das Ausklappen der Verlängerung ein Kraftaufwand erforderlich ist (siehe zum Beispiel das Dokument US-A-3235896).

Der Erfindung liegt die Aufgabe zugrunde, die eingangs erwähnten Brücken so zu verbessern, dass der Kraftaufwand für das Verschwenken der Brückenplatte und dem damit verbundenen Ausklappen der Verlängerung im Vergleich zu solchen Überladebrücken vermindert wird, bei denen das erwähnte Seil schräg oder senkrecht nach unten gerichtet und dort verankert ist.

Zur Lösung dieser Aufgabe erstreckt sich erfindungsgemäss das mit seinem einen Ende an einem etwa senkrechten Hebel des Klappgestänges angreifende und mit seinem anderen Ende an dem Hebel verankerte Seil od. dgl. zumindest im wesentlichen parallel zur Brückenplatte. Vorzugsweise greift dabei das Seil an einem sich in der Ruhestellung der Verlängerung etwa senkrecht nach unten erstreckenden Hebel des Klappgestänges an. Zweckmässigerweise wird auch das andere Seilende in der Nähe des oberen, freien Endes des Hebels verankert.

Eine solche Seilanordnung hat den Vorteil, dass die Bedienungskräfte für das Ausklappen der Verlängerung klein gehalten und beim Hochklappen der Verlängerung kaum spürbar sind. Zugleich ist das Seil so unterhalb der Brückenplatte anordnet, dass es nicht störend wirken kann im Vergleich zu solchen Zugseilen, die etwa senkrecht nach unten geführt sind.

Weitere Einzelheiten der Erfindung werden anhand der Zeichnung erläutert, in der ein Ausführungsbeispiel der Erfindung dargestellt ist. Es zeigen :

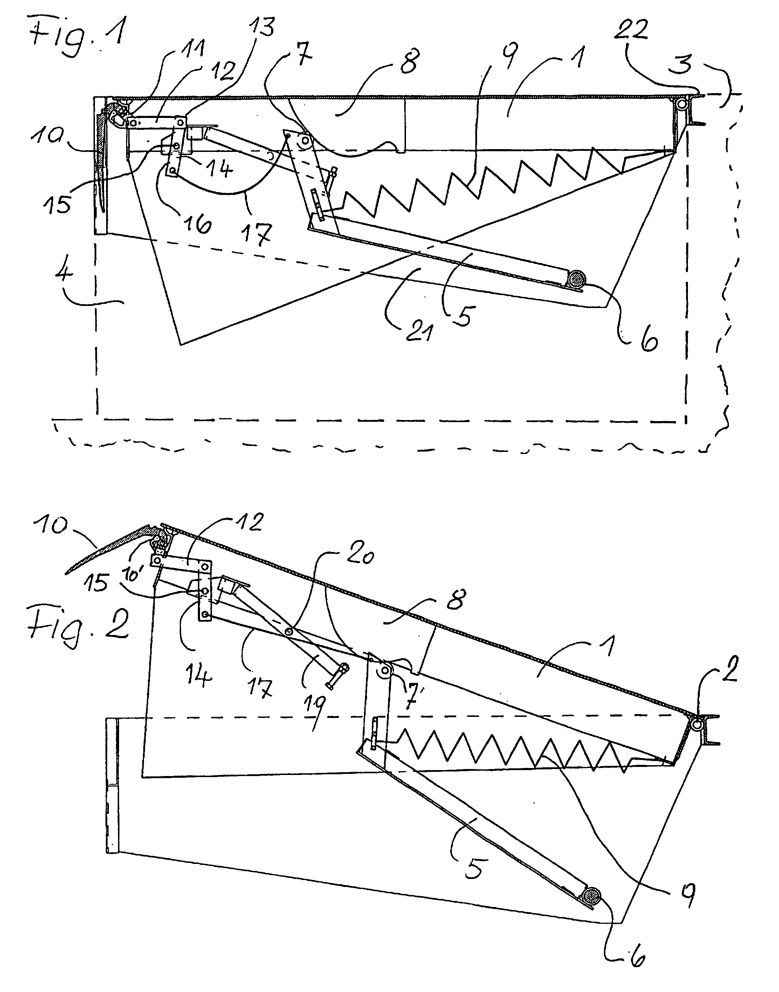

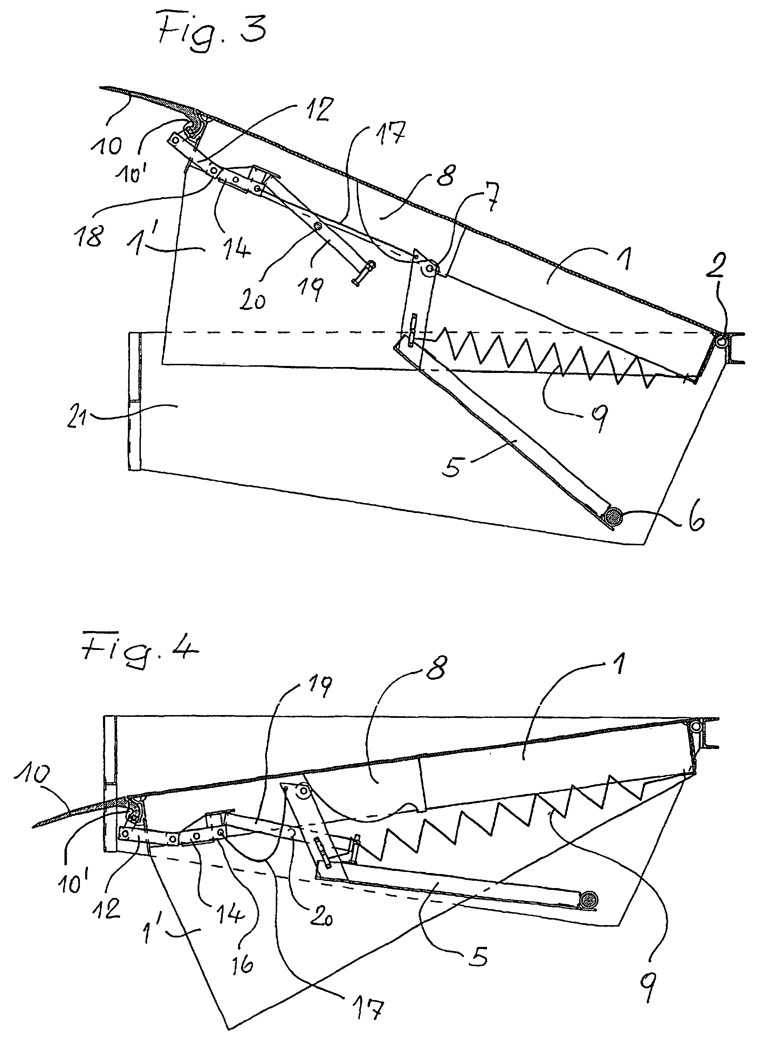

Fig. 1 - 4 je einen senkrechten Schnitt durch eine Überladebrücke für Rampen in unterschiedlichen Betriebsstellungen, und zwar Fig. 1 die Brücke in der Ruhestellung mit waagerechter Brückenplatte, Fig. 2 die Brücke in teilweise angehobenem Zustand, Fig. 3 die Brücke in der oberen Endstellung und Fig. 4 die Brücke kurz vor Erreichen der unteren Endstellung.

Die Überladebrücke ist über ihre Brückenplatte 1 mit seitlichen Schutzblechen 1' an ihrem rampenseitigen Ende um eine waagerechte Achse 2 an der Rampe 3 verschwenkbar gelagert und in die der Brückenausdehnung entsprechend grosse Ausnehmung 4 der Rampe 3 hineinschwenkbar, allerdings aber auch derart nach oben schwenkbar, dass das freie Ende der Brückenplatte 1 über die Rampenebene gelangt.

Es ist ein winkelförmiger Hebel 5 vorgesehen, der unten an einer in der Ausnehmung 4 befindlichen Querachse 6 verschwenkbar gelagert ist. Sein oberes, mit einer Rolle 7 versehenes Ende berührt eine Kurvenscheibe 8 der Brückenplatte 1. Dieser Hebel steht unter der Wirkung von Zugfedern 9, die am hinteren Ende der Brückenplatte 1 befestigt sind und stets danach trachten, den Hebel 5 bzw. seine Rolle 7 gegen die Kurvenscheibe 8 zu ziehen, um so einer ungewollten Verschwenkung der Brückenplatte 1 nach unten entgegenzuwirken.

Am freien Ende der Brückenplatte 1 ist eine zur Auflage auf einer Plattform eines LKW od. dgl. dienende Verlängerung 10 um eine Querachse bei 10' klappbar angeordnet. Ihr nach hinten schräg nach unten gerichteter Schwenkhebel 11 ist gelenkig mit einer Schubstange 12 verbunden, die an einem Ende 13 eines Doppelhebels 14 mit an der Brückenplatte 1 gelagerter Achse 15 angreift. Am anderen Ende 16 greift ein Seil 17 an, dessen hinteres Ende mit dem oberen Ende des Hebels 5 verbunden ist.

In der Stellung gemäss Fig. 1 steht der Doppelhebel 14 etwa senkrecht, wobei sich das Ende 13 oben und das Ende 16 unten befindet.

Soll die Brücke in Betrieb genommen werden, so wird die Brückenplatte 1 von Hand nach oben geschwenkt. Dabei strafft sich das Seil 17. Der Doppelhebel 14 verschwenkt in eine zur Brückenplatte 1 parallele Lage, wobei die Verlängerung 10 über die Schubstange 12 im Sinne von Fig. 2 ausgeklappt wird. Mit Erreichen der oberen Endstellung - die Verlängerung 10 ist dann voll ausgeklappt - hat das Gelenk 18 zwischen der Schubstange 12 und dem Doppelhebel 14 den Totpunkt überschritten. Damit wird die ausgeklappte Stellung der Verlängerung 10 stabilisiert.

Die Brücke kann nunmehr in die Arbeitsstellung gebracht werden.

Zur Ausserbetriebnahme wird die Brückenplatte nach unten in die Stellung gemäss Fig. 4 geschwenkt. Das hintere Ende eines Entriegelungsdoppelhebels 19 mit einer Schwenkachse bei 20 trifft dann auf eine seitliche Verbreiterung des Hebels 5, der mit seinem anderen Ende dann das Ende 16 nach unten drückt und dabei den vorgenannten Totpunktüberschlag rückgängig macht. Unter diesen Voraussetzungen klappt die Verlängerung 10 unter ihrem Eigengewicht wieder nach unten ( Stellung gemäss Fig. 1 ).

Wichtig ist, dass das Seil 17 ( in gestraffter Stellung) ) stets etwa parallel zur Brückenplatte 1 verläuft. Das Ende 16 zeigt zu Beginn der Operation nach unten; demgemäss weist das Ende 13 des gestreckt ausgebildeten Doppelhebels 14 nach oben. Zudem ist das hintere Ende des Seiles 17 am oberen Ende des Hebels 5 befestigt, also nahe unterhalb der Brückenplatte 1. Dadurch ergibt sich ein kräftemässig günstiges Ausklappen der Verlängerung.

Es sei erwähnt, dass zur Einbaueinheit der Überladebrücke seitliche Begrenzungsbleche 21 und Begrenzungen 22 gehören.

## Patentansprüche

1. Überladebrücke für Rampen mit einer an ihrem rampenseitigen Ende um eine waagerechte Achse (2) verschwenkbaren Brückenplatte (1), die an ihrem freien Ende mit einer von der etwa senkrechten Ruhelage aus in die etwa waagerechte Arbeitsstellung ausklappbaren Verlängerung zum Auflegen auf die zu be- bzw. entladende Plattform versehen ist, wobei auf die Brückenplatte von unten her, vorzugsweise über eine Kurvenscheibe (8), ein unter Federspannung stehender, schwenkbarer Hebel (5) zur Erleichterung des Hochschwenkens der Brückenplatte (1) von Hand einwirkt und das Ausklappen der Verlängerung durch ein sich mit dem Hochschwenken der Brückenplatte (1) straffendes Seil (17) od. dgl. erfolgt, das mit seinem einen Ende über ein Klappgestänge mit der Verlängerung verbunden und an seinem anderen Ende verankert ist, **dadurch gekennzeichnet, dass** das an seinem einen Ende an einem in der Ruhestellung der Brücke etwa senkrechten Hebel (14) des Klappgestänges angreifende und mit seinem anderen Ende an dem Hebel (5) befestigte Seil (17) od. dgl. im gestrafften Zustand zumindest im wesentlichen parallel zur Brückenplatte (1) verläuft.

2. Brücke nach Anspruch 1, **dadurch gekennzeichnet, dass** der Hebel (14) mit einer Schubstange (12) ein Gelenk (13) bildet, wobei durch einen Zug des Seiles (17) beim Hochklappen der Brückenplatte (1) das Gelenk zur Stabilisierung ( Fixierung ) der ausgeklappten Stellung der Verlängerung (10) eine Totpunktüberschreitung erfährt, die durch einen vom Hebel (5) betätigten Entriegelungshebel (19) aufhebbar ist.

3. Brücke nach Anspruch 1, **dadurch gekennzeichnet, dass** das Seil (17) am unteren Teil (16) des senkrechten Hebels (14) angreift und mit seinem oberen Teil (13) auf eine zum Klappen der Verlängerung (10) dienenden Schubstange (12) einwirkt.

4. Brücke nach Anspruch 1, **dadurch gekennzeichnet, dass** das Seil (17) in dem Bereich des Hebels (5) an diesem angreift, der mit einer Rolle (7) zur Beaufschlagung einer an der Brückenplatte (1) befindlichen Kurvenscheibe (8) versehen ist.

5. Brücke nach Anspruch 2, **dadurch gekennzeichnet, dass** die Betätigung des Entriegelungshebels (19) durch den Hebel (5) kurz vor Erreichen der unteren Brückenstellung oder in dieser Brückenstellung erfolgt.

## Claims

1. Bridging device for platforms, having a bridge plate (1) which is pivotable about a horizontal axis (2) at its end facing the platform, and which bridge plate is provided on its free end with an extension portion, which can be pivoted from the substantially vertical inoperative position into the substantially horizontal operative position, for support on the deck to be loaded or unloaded, a spring-loaded pivotable lever (5) acting on the bridge plate from below, preferably via a cam disc (8), to facilitate the upward pivotal movement of the bridge plate (1) by hand, and the outward pivotal movement of the extension portion being effected by means of a cable (17) or the like, which tightens with the upward pivotal movement of the bridge plate (1), which cable is connected to the extension portion by its one end via a pivotal linkage and is secured at its other end, **characterised in that** the cable (17) or the like, which at its one end co-operates with a lever (14) of the pivotal linkage and is mounted with its other end on the lever (5), extends at least substantially parallel to the bridge plate (1) in its tightened state, said lever (14) being substantially vertical when the bridging device is in the inoperative position,

2. Bridging device according to claim 1, **characterised in that** the lever (14) forms, with a push-rod (12), a pivot joint (13), the pivot joint exceeding a dead-centre point by pulling on the cable (17) during the upward pivotal movement of the bridge plate (1) to stabilise (fix) the outwardly pivoted position of the extension portion (10), said dead-centre excess being able to be eliminated by a release lever (19) actuated by the lever (5).

3. Bridging device according to claim 1, **characterised in that** the cable (17) co-operates with the lower part (16) of the vertical lever (14) and, with its upper part (13), acts on a push-rod (12) which serves to pivot the extension portion (10).

4. Bridging device according to claim 1, **characterised in that**, in the region of the lever (5), the cable (17) co-operates with said lever, which is provided with a roller (7) to act on a cam disc (8) situated on the bridge plate (1).

5. Bridging device according to claim 2, **characterised in that** the actuation of the release lever (19) is effected by the lever (5) shortly prior to the lower position of the bridging device being attained or in this position of the bridging device.

## Revendications

1. Niveleur de quai comportant un tablier (1) qui est peut être basculé à son extrémité côté quai par rapport à un axe (2) horizontal et qui est muni à son extrémité libre d'un prolongement pouvant être rabattu de la position de repos à peu près verticale à la position de travail à peu près horizontale en vue de reposer sur la plate-forme à charger ou à décharger, un levier (5) basculant, soumis à la tension d'un ressort, agissant du bas sur le tablier, de préférence par l'intermédiaire d'une came (8), pour faciliter le basculement du tablier (1) à la main et le rabattement du prolongement s'effectuant par un câble (17) ou analogue qui se tend par le basculement du tablier (1), qui est relié par l'une de ses extrémités, par l'intermédiaire d'une tige repliable, au prolongement et qui est ancré à son autre extrémité, **caractérisé en ce que** le câble (17) ou analogue, qui attaque à l'une de ses extrémités un levier (14) à peu près vertical, en la position de repos du niveleur, de la tige repliable et qui est fixé par son autre extrémité au levier (5), s'étend lorsqu'il est tendu au moins sensiblement parallèlement au tablier (1).

2. Niveleur suivant la revendication 1, **caractérisé en ce que** le levier (14) forme avec une bielle (12) une articulation (13), l'articulation subissant par une traction du câble (17) lors du rabattement vers le haut du tablier (1), en vue de la stabilisation (immobilisation) de la position sortie du prolongement (10), un dépassement de point mort qui peut être supprimé par un levier (19) de déverrouillage actionné par le levier (5).

3. Niveleur suivant la revendication 1, **caractérisé en ce que** le câble (17) attaque la partie (16) inférieure du levier (14) vertical et agit par sa partie (13) supérieure sur une bielle (12) servant au rabattement du prolongement (10).

4. Niveleur suivant la revendication 1, **caractérisé en ce que** le câble (17) attaque le levier, dans la région du levier (5) qui est munie d'un galet (7) s'appliquant à une came (8) se trouvant sur le tablier (1).

5. Niveleur suivant la revendication 2, **caractérisé en ce que** l'actionnement du levier (19) de déverrouillage s'effectue par le levier (5) peu avant que la position inférieure du niveleur ne soit atteinte ou en cette position du niveleur.
